# DEMANDE DE BREVET EUROPEEN

(11) **EP 1 046 837 A1**
(43) Date de publication de la demande: **25.10.2000**
(21) Numéro de dépôt: 00400983.3
(22) Date de dépôt: 10.04.2000
(51) Int. Cl.: F16H 29/08

(54) **Variateur continu de vitesse par oscillations réglables**

(30) Priorité: 23.04.1999 FR 9905163
(71) Demandeur: Boone, Jacques, 78500 Sartrouville (FR)
(72) Inventeur: Boone, Jacques, 78500 Sartrouville (FR)

(57) **Abrégé**

Dispositif de variation continue de vitesse pour moteur à explosien de faible cylindrée dont le principe de fonctionnement est le suivant:
- Transformation de la rotation de l'arbre moteur en oscillation linéaire d'une biellette primaire (3).
- Transformation de l'oscillation linéaire de la biellette en oscillation de rotation de l'axe secondaire (11).
- Variation continue de l'amplitude de l'oscillation en rotation de l'axe secondaire (11).
- Transformation de l'oscillation en rotation de l'axe secondaire (11) en rotation continue de l'arbre de sortie.

## Description

La présente invention concerne un changement de vitesse à variation continue adapté à la transmission de puissance de moteurs à explosion de faible cylindrée.

Actuellement pour obtenir une variation continue de vitesse on utilise des courroies montées sur des roues dont le diamètre peut varier (flasques s'écartant ou se rapprochant).

Ce mécanisme présente une usure des courroies et une puissance transmise limitée.

Le dispositif de la présente invention permet de remédier à ces inconvénients. Il se compose de :
- Un moyen A de transformer une rotation continue en un mouvement d'oscillation linéaire à amplitude fixe .Il comprend un axe moteur apportant la puissance mécanique avec un vilebrequin monté en bout d'arbre sur lequel est articulée une biellette. Cette biellette dite primaire oscille autour d'un point fixe solidaire d'un support mobile et transforme le couple moteur en une force linéaire.
- Un moyen B de transformation du mouvement alternatif linéaire en mouvement alternatif de rotation se compose de deux biellettes articulées .La biellette primaire transmet à la biellette secondaire un effort transversal alternatif qui entraîne la biellette secondaire dans un mouvement rotatif oscillatoire transmis à l'axe secondaire.
- Un moyen C de variation d'amplitude de l'oscillation rotative de la biellette secondaire se compose d'un support mobile ,constitué d'une plaque métallique plane traversée par l'arbre moteur autour duquel il tourne. Ce support est muni d'un axe de guidage appelé point fixe autour duquel oscille la bielle primaire.Il comporte également une denture appelé crémaillère décrivant un arc de cercle centré sur l'axe moteur. L'action d'un pignon ou d'une vis sans fin sur la crémaillère provoque le déplacement du support mobile qui écarte ou rapproche la biellette primaire de l'axe secondaire .La biellette secondaire oscille donc entre deux points dont la distance est variable. L'amplitude de l'oscillation linaire étant constante l'amplitude de l'oscillation rotative varie inversement comme la distance entre la biellette primaire et l'axe secondaire .

Cette variation de distance engendre deux configuration possibles:
- dans la variante 1: La biellette primaire guidée à ses deux extrémités ( par 2 et 5 ) est équipée dans une position intermédiaire d'une liaison mécanique 6 permettant le glissement et la rotation sur la biellette secondaire 7 tout en transmettant un effort mécanique transversal, la biellette 7 restant solidaire de l'axe secondaire.
- dans la variante 2 :La biellette primaire est reliée à la biellette secondaire par une articulation simple permettant uniquement la rotation. La biellette secondaire est reliée à l'axe secondaire par une liaison mécanique autorisant le glissement longitudinal tout en transmettant le couple moteur par une oscillation en rotation.
- Un moyen D de transformer le mouvement oscillatoire rotatif d'amplitude variable en un mouvement rotatif continu de vitesse variable. Ceci est réalisé par une liaison mécanique entre deux roues. Cette liaison est réalisée par des éléments fixés sur une roue et exerçant sur l'autre roue une pression différente suivant le sens de rotation ,privilégiant ainsi un sens de rotation et provoquant une rotation continue. Le couple et la vitesse liés à cette rotation sont variables. Ainsi lorsque le support de la biellette primaire est éloigné de l'axe secondaire l'amplitude du mouvement oscillatoire de rotation est faible mais le levier est important: la vitesse de rotation sera faible mais le couple transmis sera fort. Au contraire lorsque le support mobile est proche de l'axe secondaire l'amplitude sera grande , le levier faible d'où une vitesse de rotation importante avec un couple faible.

La puissance motrice sera donc transmise de manière continue d'une vitesse faible avec un couple fort jusqu'à une vitesse forte avec un couple faible selon la position du support mobile commandée par une crémaillère.

Les dessins annexés illustrent l'invention:
- Figure 1:: Dispositif complet suivant la variante 1
- Figure 2 :: Liaison entre biellettes (variante 1)
- Figure 3:: Liaison entre biellettes et arbre secondaire.(variante 2)
- Figure 4:: Moyen D décrit avec variante 1.
- Figure 5:: Détail de fonctionnement du moyen D

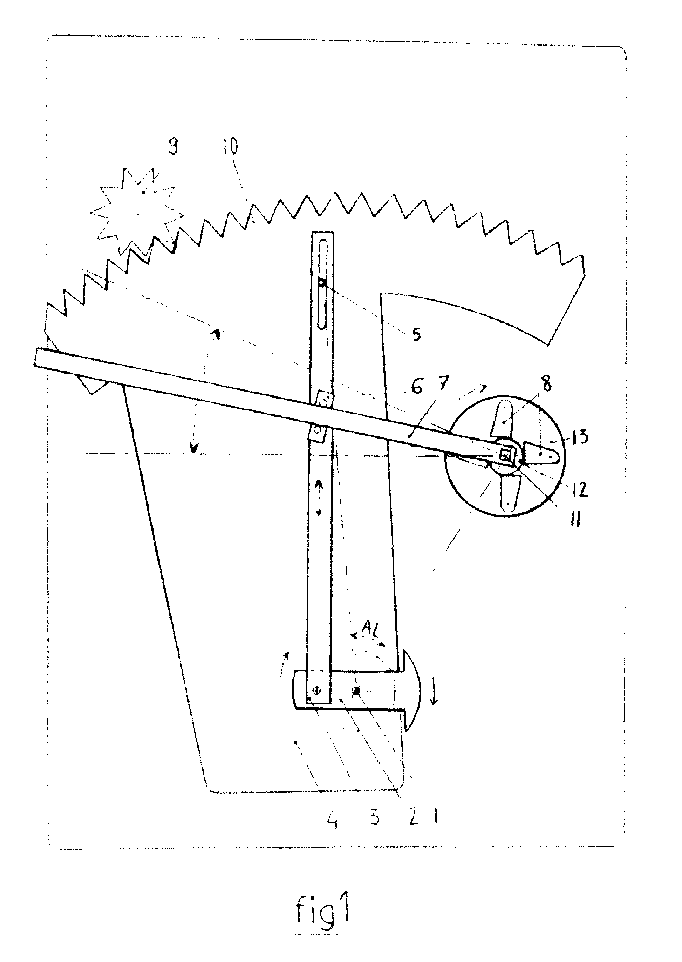

Système mécanique de variation continue du rapport de vitesse selon un mode de réalisation préféré (voir fig 1) se compose des éléments suivants:

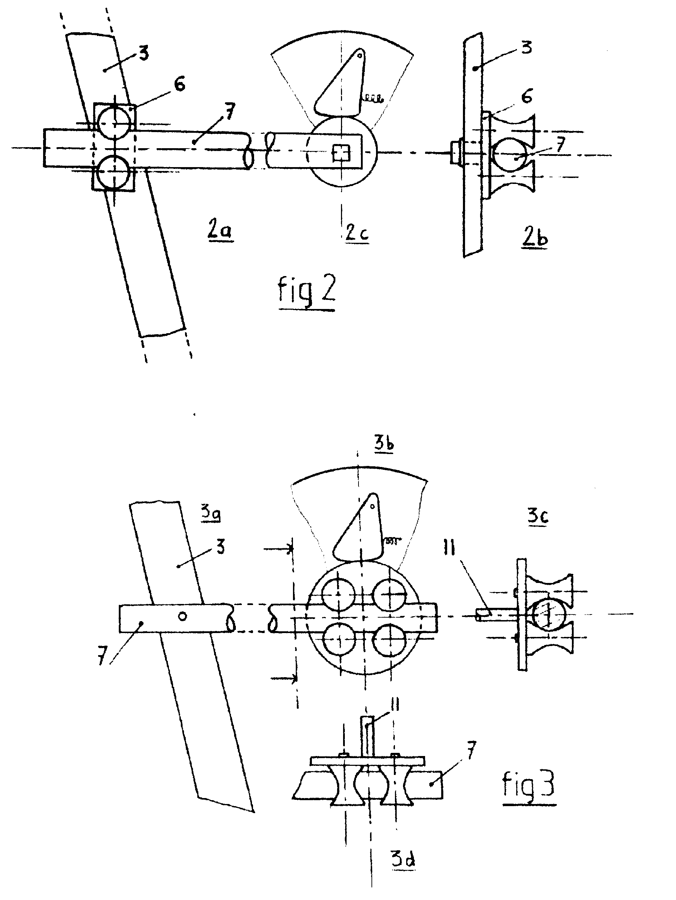

L'axe moteur recevant le couple moteur est équipé d'un vilebrequin 2 qui transmet à la biellette primaire 3 un mouvement de translation linéaire. Cette biellette 3 oscille autour d'un point fixe 5 solidaire d'un support mobile 4 . Ce support mobile peut tourner autour de l'axe moteur 1 . Il est positionné en rotation sur une crémaillère 10 par le pignon 9 .La rotation de ce pignon 9 fait varier l'angle AL ( défini par les points 5-1-11) et la distance entre la biellette 3 et l'axe secondaire 11. Cette variation de distance est réalisée par le glissement:
- dans la variante 1: des biellettes l'une par rapport à l'autre par un système de galets tournant sur un support 6 lui-même pivotant sur la biellette 3 (voir fig 2 ) .La biellette secondaire étant fixée solidaire sur l'axe secondaire.
- dans la variante 2: de la biellette secondaire coulissant sur des galets pivotant fixés sur un disque entraînant l'axe secondaire 11 en rotation ( voir fig 3 ) .Les deux biellettes sont reliées simplement par un axe.

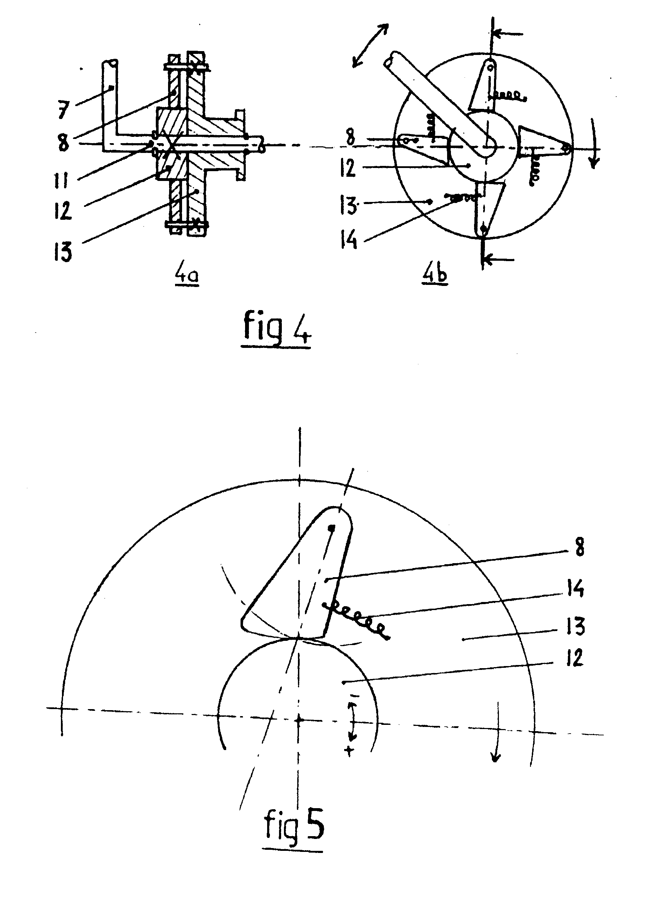

Ces deux variantes permettent à la biellette primaire 3 de transférer un effort transversal de va et vient à la biellette secondaire 7 qui est ainsi animée d'un mouvement oscillatoire rotatif qu'elle transmet à l'axe 11.Sur cet axe est fixé solidaire une première roue 12 (voir fig 4 ).

Une deuxième roue 13 est montée libre sur l'axe 11. Ces deux roues sont reliées par des éléments mobiles 8 dont la forme géométrique et l'inclinaison ne transmettent qu'un seul sens de rotation car la pression de contact des éléments 8 sur la roue 12 est différente selon le sens de rotation. Selon la figure 5 l'élément mobile 8 est articulé en rotation sur un axe perpendiculaire à la roue 13 .Le ressort 14 maintient l'élément 8 en contact permanent avec la roue 12.La surface de 8 en contact avec la roue 12 est incliné de tel façon qu'une rotation de la roue 12 dans le sens + par rapport à la roue 13 entraîne un coincement de 8 sur 12 et augmente fortement la pression de contact rendant solidaire 12 et 13 .Au contraire une rotation inverse dans le sens - va soulever l'élément 8 et diminuer fortement la pression de contact rendant les deux roues indépendantes et libres dans leurs rotations respectives.

Ainsi l'oscillation en rotation d'amplitude variable de l'axe 11 est transformée en rotation de vitesse variable sur la roue . Pour un moteur tournant à vitesse constante la position de la crémaillère déterminera le couple et la vitesse de rotation de l'arbre de sortie.(voir fig 1).

Lorsque la crémaillère positionne le support mobile loin de l'axe 11 la biellette 7 sera animée d'un mouvement oscillatoire de faible amplitude mais d'un couple important. (Effet de levier important).La rotation de la roue de sortie sera lente avec un couple fort .Au contraire lorsque le support mobile est proche de l'axe 11 la biellette 7 sera animée d'un mouvement oscillatoire de grande amplitude avec un couple faible. La rotation de la roue de sortie 13 sera rapide avec un couple faible. Ainsi toutes les positions intermédiaires entre les positions extrêmes précédentes seront affectées d'une vitesse et d'un couple variable ,variant en sens inverse de façon à ce que la puissance de sortie reste constante .D'où une variation continue de la vitesse et du couple sur l'arbre de sortie. Pour un fonctionnement harmonieux il est nécessaire que l'effort moteur de la bielle primaire coïncide avec l'effort résistant de la bielle secondaire.

Ce système est utilisable pour des véhicules mus par des moteurs à explosion de faible puissance tels que cyclomoteurs ,motocyclettes ,voiturettes ,petites voitures de ville.

## Revendications

1. Système de variation continue de vitesse caractérisé en ce qu'il se compose de :
- Un moyen A de transformation d'une rotation continue en un mouvement oscillatoire linéaire à amplitude fixe,
- Un moyen B de transformation du mouvement oscillatoire linéaire en un mouvement oscillatoire rotatif,
- Un moyen C de variation d'amplitude du mouvement oscillatoire rotatif,
- Un moyen D de transformer le mouvement oscillatoire rotatif en rotation continue.

2. Système de variation continue de vitesse selon la revendication n°1 caractérisé en ce que le moyen A de transformer la rotation continue de l'axe moteur en oscillation linéaire se compose d'un vilebrequin entraînant une biellette primaire 3 dans un mouvement oscillatoire autour d'un point fixe 5 solidaire du support mobile 4 .

3. Système de variation continue de vitesse selon la revendication n°1 caractérisé en ce que le moyen B de transformer le mouvement d'oscillation linéaire en un mouvement d'oscillation en rotation s'effectue par deux biellettes articulées entre elles , la biellette primaire 3 transmettant un effort transversal oscillatoire à la biellette secondaire 7 qui se met à osciller en rotation entraînant l'axe secondaire 11 .

4. Système de variation continue de vitesse selon la revendication n°1 caractérisé en ce que le moyen C de variation d'amplitude est réalisé par un support mobile 4 sur lequel est guidé le mouvement oscillatoire linéaire, qui peut s'écarter et se rapprocher de l'axe secondaire 11 en pivotant autour de l'axe moteur 1.

5. Système de variation continue de vitesse selon la revendication n°3 caractérisé en ce qu'une liaison mécanique relie les deux biellettes en autorisant le glissement et la rotation des deux biellettes l'une par rapport à l'autre tout en transmettant l'effort transversal de la biellette primaire 3 à la biellette secondaire 7 solidaire de l'axe secondaire 11 .

6. Système de variation continue de vitesse selon la revendication n°3 caractérisé en ce qu'une liaison mécanique relie la biellette 7 à l'axe secondaire 11 en autorisant le glissement de la biellette secondaire 7 par rapport à l'axe secondaire 11 tout en transmettant l'oscillation rotative à l'axe secondaire 11.

7. Système de variation continue de vitesse selon la revendication n°1 caractérisé en ce que le moyen D de transformer le mouvement rotatif oscillatoire en un mouvement rotatif continu se compose de deux roues coaxiales dont l'une possède des éléments intermédiaires mobiles en contact avec l'autre roue et dont la pression de contact varie selon le sens de rotation privilégiant un sens de rotation pour lequel le couple moteur est transmis.

8. Système de variation continue de vitesse selon la revendication n°4 caractérisé en ce que le support mobile 4 comporte un point fixe 5 autour duquel oscille la bielle primaire 3.

9. Système de variation continue de vitesse selon la revendication n°4 caractérisé en ce que le support mobile 4 comporte une crémaillère 10 permettant son positionnement angulaire. (angle AL )
